# EUROPEAN PATENT APPLICATION

(11) **EP 1 383 127 A2**
(43) Date of publication of application: **21.01.2004**
(21) Application number: 03015602.0
(22) Date of filing: 15.07.2003
(51) Int. Cl.: G11B 20/12, G11C 7/16, G06F 12/14, G06F 1/00

(54) **Host processing device using external storage medium**

(30) Priority: 16.07.2002 KR 2002021305; 20.06.2003 KR 2003040147
(71) Applicant: Nextway Co., Ltd., Kangnam-gu, Seoul 135-924 (KR)
(72) Inventor: Bum, Jae-Ryong, Kangnam-gu, Seoul 135-080 (KR)
(74) Representative: Weber, Joachim, Dr.

(57) **Abstract**

Disclosed herein is a host processing device that has a space for accommodating an external storage medium. The host processing device can be provided with and reproduce media data files from the external storage media connected thereto. The host processing device accesses an external storage medium to read and reproduce media files stored in the external storage medium, and stores, in a certain digital format, media files that are generated by encoding analog signals provided from a tuner module or microphone module in the external storage medium. The host processing device can handle a certain secure measure for protecting copyright for the media files. According to the host processing device, without a large capacity non-volatile storage medium therein, the media files can be reproduced and recorded, and the demand of the copyright protection for the media files can be fulfilled.

## Description

### BACKGROUND OF THE INVENTION

### 1. Field of the Invention

The present invention relates generally to a host processing device that has a space for accommodating an external storage medium, that can be provided with media data from the external storage media, and that can reproduce the media data. More particularly, the present invention relates to a host processing device that accesses an external storage medium to read and reproduce media files stored in the external storage medium, and that stores, in a certain digital format, media files which are generated by encoding analog signals provided from a tuner module or microphone module in the external storage medium. Further more particularly, the present invention relates to a host processing device that handles a certain secure measure for protecting copyright for the media files. According to the present invention, the media files can be reproduced and recorded even though the host processing device is not equipped therein with a large capacity non-volatile storage medium, and the demand of the copyright protection for the media files can be fulfilled.

### 2. Description of the Related Art

In general, MP3 technology denotes Moving Picture Expert Group (MPEG) layer 3, and is one of audio parts of MPEG technology. MPEG has started to announce MPEG1 standard, then has announced MPEG2 standard to fulfill increasing requirements for multimedia data compression, and recently has announced MPEG4 standard for an object oriented multimedia communications. The first standard MPEG1 is the coding technology for compressing moving images and audio data into a maximum of 1.5 Mbps in a digital storage device. In the audio part of the MPEG1 standard, three kind of digital audio coding techniques are defined, which is referred to as layer 1, layer 2 and layer 3, respectively.

The MPEG audio layer compresses data using a coding technique called "perceptual coding." The perceptual coding is a technique using a masking effect obtained by analyzing a hearing sense model, and is a kind of trick using the insensitivity of human ears. In detail, the masking effect, implemented by frequency masking and temporal making, causes a phenomenon in which the weaker sound than a critical level is hidden by a stronger sound and is unperceivable to human ears. With the masking effect, the amount of data can be compressed to 1/12 without losing the quality of sound that human ears recognize. Such standardized MP3, MPEG audio layer 3, allows a user to enjoy Compact Disc (CD) level music through a Personal Computer (PC) or network, is used for a digital audio broadcast using a satellite, or enables a real-time Audio On Demand (AOD) service using the Internet.

The size of an MP3 player utilizing MP3 technology is only 30~70% of that of a conventional cassette tape player or CD player. Since the MP3 player does not include a motor unit, its power consumption can be highly reduced. That is, the MP3 player is advantageous in that an additional medium (cassette tapes or CD) is not needed and playtime is much longer. However, in order to maintain data after storing the data, the MP3 player must be equipped therein with, rather expensive, a non-volatile memory, such as a flash memory.

As described above, the MP3 player accesses a PC or network, and downloads and stores audio data to and in an internal memory. For example, supposing that the capacity of the internal memory is 32 Mbytes, the MP3 player can store audio data that are reproduced about 60~70 minutes. However, the MP3 player is disadvantageous in that the audio data can be downloaded only when a system having a network interface, such as PC, is provided.

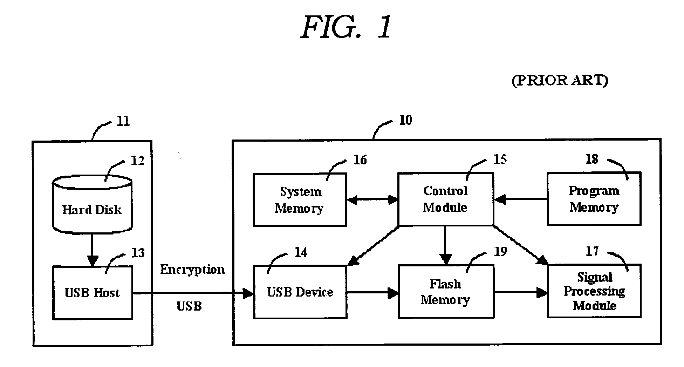

Currently, apparatuses for reproducing and recording media files, such as an MP3 player or voice recorder, have been widely used. FIG. 1 is a block diagram showing a configuration in which a conventional MP3 player 10 is used. The conventional MP3 player 10 is equipped therein with a flash memory 19 that is used as a large capacity non-volatile storage device to store media files. The MP3 player 10 receives media files, such as MP3 files or WMA files, stored in a hard disk 12 of a computer system 11, and stores the media files in the flash memory 19. Then, when a user command to reproduce a specific media file is received, the MP3 player 10 reads the specific media file from the flash memory 19 and transmits file data to a signal processing module 17, so that the signal processing module 17 decodes the file data in a certain signal processing method, for example, an MP3 decoding method.

The conventional MP3 player 10 further includes a program memory 18 for storing the system program of the MP3 player 10, and, in addition to the flash memory 19, a system memory 16 for providing working space for the operation of the MP3 player 10, which is generally a volatile memory. In other embodiments, some partial space of the flash memory 19 can be assigned to store the system program of the MP3 player 10. In that case, it can be considered that the program memory 18 is provided in the flash memory 19.

As described above, for file transmitting and receiving between the computer system 11 and the MP3 player 10, the computer system 11 and the MP3 player have the function of digital transmission medium access. In FIG. 1, Universal Serial Bus (USB) medium is used as an example of the provision of the function of digital transmission medium access. In USB technology, when two devices are connected to each other through a USB medium, a device performing a master function is referred to as a USB host, while a device performing a slave function is referred to as a USB device. In the case where the MP3 player 10 is provided with a media file from the computer system as shown in FIG. 1, the computer system 11 is the USB host and the MP3 player is the USB device. To this end, the computer system 11 includes a USB host module 13 and the MP3 player 10 includes a USB device module 14.

An IEEE1394 medium and a wireless Local Area Network (LAN), as well as the USB, can be used as the digital transmission medium for transmitting and receiving the media files. With respect to the connection between the two devices, the devices are connected to each other through a cable, directly through connection ports, or through a wireless medium. For example, the i-Pod product of Apple Computer, Inc. is a typical MP3 player utilizing an IEEE1394 medium. According to the transmission technology, different scheme of device configuration other than the above-described USB host-device scheme can be employed. For example, IEEE1394 technology employs a peer-to-peer scheme other than the master-slave scheme. Particularly, in Serial Bus Protocol 2 (SBP2), that is a higher-layer management protocol for IEEE1394, the computer system 11 corresponds to a SBP2 initiator and the MP3 player 10 corresponds to a SBP2 target. Meanwhile, in digital transmission media including USB, IEEE1394, and wireless LAN, the computer system 11 and the MP3 player may be modeled as a controller and target, respectively.

Three issues in the conventional MP3 player manufacturer are cost reduction, weight reduction, and minimization. In the achievement of these goals, the flash memory 19 that is a large capacity non-volatile storage medium is a great obstacle. Further, with respect to storage capacity, there is another problem in which user demand for storage upgrade is raised because storage capacity becomes relatively insufficient when one or two years elapses after the MP3 player 10 are marketed. Furthermore, currently marketed external storage devices tend to support high performance digital transmission medium, but do not sufficiently utilize the available functions of the high performance digital medium.

In the meantime, the protection of copyright for digital media files, such as MP3 files, currently becomes an important issue. In the past, attempts are made to prevent illegal reproduction and to protect copyright for the media files by encrypting the media files using certain encryption technology, i.e., SecuMax, when the media files are copied from the computer system 11 to the MP3 player 10. However, these attempts are proved useless, so that the illegal reproduction of the media files is causing serious problems. Accordingly, a scheme to prevent the illegal reproduction of media files and to protect copyright for media files is eagerly desired.

### SUMMARY OF THE INVENTION

Accordingly, the present invention has been made keeping in mind the above problems occurring in the prior art, and an object of the present invention is to provide a host processing device, which accesses an external storage medium, reads and reproduces media files stored in the external storage medium, stores media files, produced by encoding analog signals transmitted from a tuner module or microphone module in a certain digital format, in the external storage medium, and handles a certain secure measure for protecting copyright for the media files, so that the media files can be reproduced and recorded even though the host processing device is not equipped therein with a large capacity non-volatile storage medium for the media files, and demand for the protection of copyright can be fulfilled.

In order to accomplish the above object, the present invention provides a host processing device for reproducing compressed audio data, including a body; a memory slot formed in a side of an upper end of the body to accommodate a specific external storage medium; command input means for instructing the host processing device to execute a specific operation; and a system control module for controlling an operation of the host processing device, the system control module including a digital interface unit adapted to communicate with the external storage medium through a port formed on an inside end of the memory slot and interface the audio data according to a certain digital interface communication standard, a processing module for processing a command signal applied from the command input means and controlling the host processing device to perform an operation corresponding to the command signal, and requesting the audio data from the external storage medium, receiving the audio data and applying the received audio data to a certain path, a memory unit for storing a program for performing a system operation of the host processing system, and a decoder unit equipped therein with a buffer to delay a transmission rate and adapted to decode the audio data under the control of the processing module.

In order to accomplish the above object, the present invention provides a host processing device using an external storage medium, including a medium access module for accessing the external storage medium through a certain digital transmission medium and providing an access to the external storage medium; a signal processing module for decoding media data according to a certain first signal processing method; a processing module for controlling an operation of the host processing device; and a system memory module for providing a memory space for the operation of the host processing device controlled by the processing module; wherein, when the processing module connects with the external storage medium, the processing module accesses the external storage medium, reads first file information of one or more media files stored in the external storage medium, and positions the first file information in the system memory module; wherein, when the processing module receives a command to select a specific one of the media files, the processing module searches for and reads data of the selected media file on the external storage medium through the medium access module based upon the first file information positioned on the system memory module, and provides the read media data to the signal processing module to be decoded according to the first signal processing method.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram showing a configuration in which a conventional MP3 player is used;
FIG. 2 is a perspective view showing the outside construction of an MP3 player that is an embodiment of a host processing device of the present invention and the outside construction of a flash disk that is an embodiment of an external storage medium to be combined with the MP3 player;
FIGS. 3a and 3b are views showing the state in which the MP3 player that is the embodiment of the host processing device of the present invention is combined with the flash disk that is the embodiment of the external storage medium;
FIG. 4 is a block diagram showing the inside construction of the MP3 player that is the embodiment of the host processing device of the present invention;
FIG. 5 is a flowchart showing the entire operation of the MP3 player that is the embodiment of the host processing device of the present invention;
FIG. 6 is a view showing an embodiment in which a host processing device of the present invention is used in combination with an external storage medium;
FIG. 7 is a view showing another embodiment in which a host processing device is used in combination with an external storage medium;
FIG. 8 is a diagram showing an embodiment of the inside construction and operation of a host processing device of the present invention to be used in combination with an external storage medium;
FIG. 9 is a table showing a 16-bit FAT structure that is used in an embodiment of a security measure in the host processing device of the present invention;
FIG. 10 is a block diagram showing an embodiment of the operation that is performed when a host processing device of the present invention used in combination with an external storage medium accesses a digital interface;
FIG. 11 is a block diagram showing an embodiment of the inside construction and operation of a host processing device of the present invention to be used in combination with an external storage medium; and
FIG. 12 is a diagram showing an embodiment in which a host processing device of the present invention is implemented in a composite host processing device.

### DESCRIPTION OF THE PREFERRED EMBODIMENTS

Reference now should be made to the drawings, in which the same reference numerals are used throughout the different drawings to designate the same or similar components.

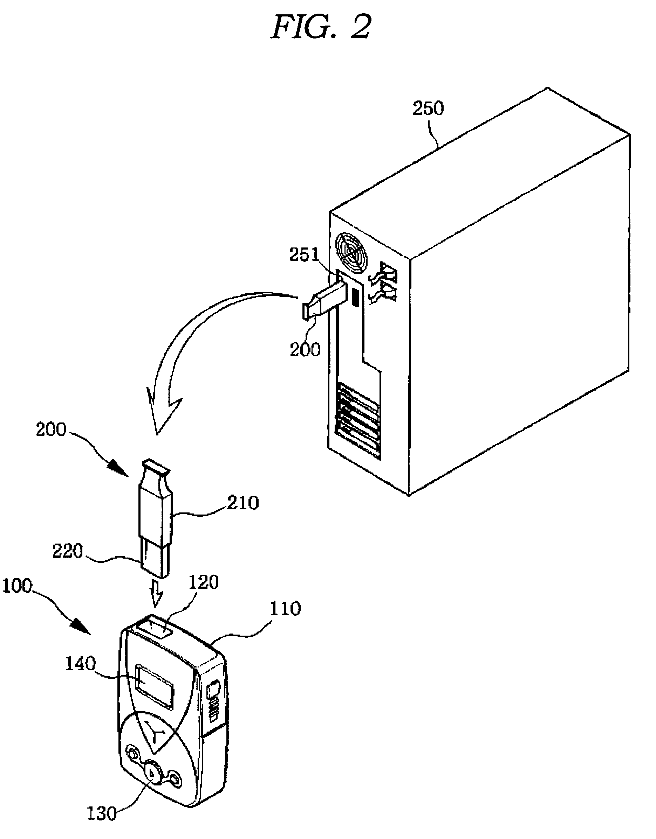

FIG. 2 is a perspective view showing the outside construction of an MP3 player 100 that is an embodiment of a host processing device according to the present invention and the outside construction of a flash disk 200 that is an embodiment of an external storage medium to be combined with the MP3 player 100. The MP3 player 100 shown in this drawing includes a body 110, a memory slot 120 formed in one side of the upper end of the body 110 to accommodate the flash disk 200, various key input means 130 for instructing the MP3 player 100 to execute specific operations, and a display means 140 for displaying the current status of the MP3 player 100 and displaying various data to the outside.

Meanwhile, the flash disk 200 used in combination with the MP3 player 100 includes a body 210 and a connector 220. The body 210 generally includes an interface unit for supporting an interchange of data by interfacing MP3 data transmitted from a USB port 251 of a PC 250 and MP3 data stored in a flash memory described later to comply with a communication standard, a control unit for performing control to download MP3 data from the PC 250 and apply stored MP3 data to the MP3 player 100 according to slave mode and host mode, respectively, and a flash memory unit for storing the MP3 data downloaded from the PC 250 and extracting and applying the stored MP3 data according to the instruction of the controller. A USB flash disk is used as the flash disk 200. Since the USB flash disk is well known, a detailed description thereof is omitted here. A grip is preferably formed at one end of the flash disk to facilitate the attachment and detachment of the flash disk to and from the MP3 player 100.

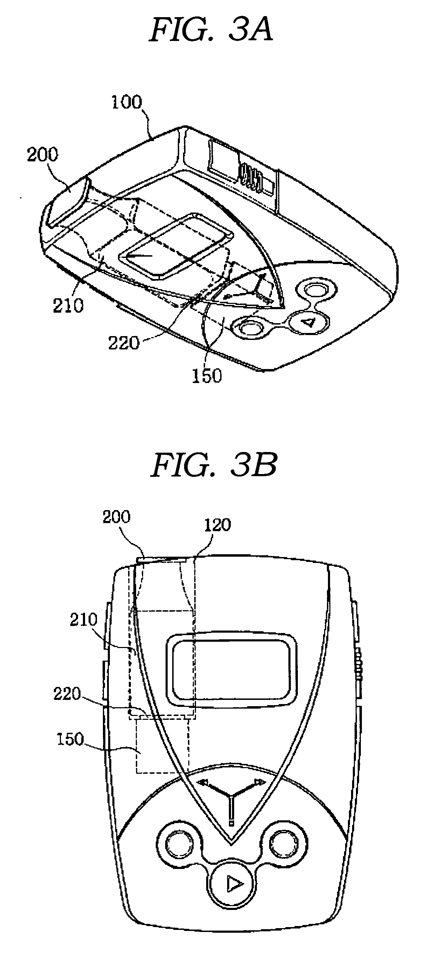

FIGS. 3a and 3b are diagrams showing the state in which the MP3 player 100 that is the embodiment of the host processing device of the present invention is combined with the flash disk 200 that is the embodiment of the external storage medium. As shown in these drawings, the MP3 player 100 is combined with the flash disk 200 by inserting the flash disk 200 into the memory slot 120 of the MP3 player 100. As illustrated by a dotted line, a USB port 150 is formed at an inside end of the memory slot 120 to be interlocked with the connector 220 of the flash disk 200.

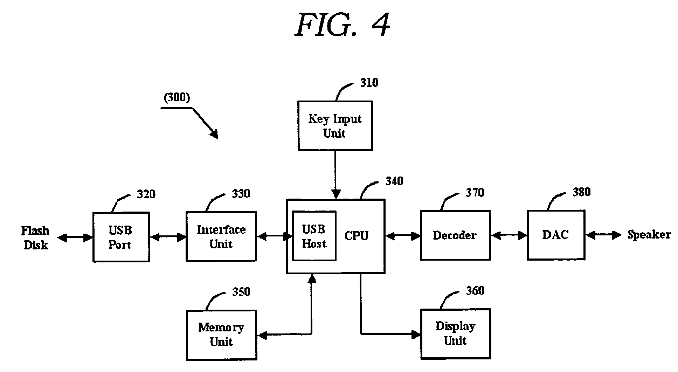

FIG. 4 is a block diagram showing the inside construction of the MP3 player 100 that is the embodiment of the host processing device of the present invention, in particular, the construction of the MP3 control module 300. The MP3 control module 300 includes a key input unit 310, a USB port 320, an interface unit 330, a Central Processing Unit (CPU) 340, a memory unit 350, a display unit 360, a decoder unit 370, and a D/A converter (DAC) 380.

The key input unit 310 functions to generate a key signal to instruct the MP3 player 100 to execute specific operations (for example, reproduction, volume up/down, operation start/end, music selection). The USB port 320 is connected to the connector (220 in FIGS. 1 and 2) of the flash disk, and functions to provide a data path for packet data transmitted to the flash disk in response to an MP3 data request and MP3 data applied from the flash disk. The interface unit 330 is interconnected with the USB port 320, and functions to interface various data transmitted to the flash disk and applied to the flash disk to comply with communication standards.

The CPU 340 is connected to the key input unit 310 and the interface unit 330. The CPU 340 integrally controls the respective elements of the system to perform an operation corresponding to a key signal by processing the key signal applied to the key input unit 310, requests and receives MP3 data from the flash disk, and instructs the received MP3 data to be applied to a specific path. Further, the CPU 340 is provided with a USB host function to transmit MP3 data applied to the flash disk to a specific path through the interface unit 330.

The memory 350 is interconnected with the CPU 340. The memory 350 stores an execution program for executing the operations of the MP3 player, which is programmed to execute a corresponding operation according to the instruction of the CPU 340. The display unit 360 is connected to the CPU 340, and functions to display data applied from the CPU 340. In an embodiment of the display unit 360, a Liquid Crystal Device (LCD) is used as the CPU 340.

The decoder unit 370 is connected to the CPU 340. The decoder unit 370 is equipped with a buffer to delay transmission speed, and restores the MP3 data fed from the CPU 340 to original voice data (that is, digital data). The D/A converter 380 is connected to the decoder unit 370, and functions to convert decoded digital data to analog signals and apply the analog signals to a speaker. Since many resources are allocated to decompress compressed data, operational speed should be adjusted. Accordingly, the decoder unit 370 is equipped with an operation delay buffer to temporarily store decompressed digital data, thus allowing operational speeds to accord with each other. A sigma-delta converter that can implement a high resolution of more than 16 bits can be preferably used as the D/A converter.

In the meantime, although the above-described key input unit 310, the interface unit 330, the CPU 340, the memory unit 350, the display unit 360, the decoder unit 370 and the D/A converter 380 have been described as being separated from each other, they may be implemented as a single chip. The detailed operation of the host processing device is described below with reference to the accompanying drawings.

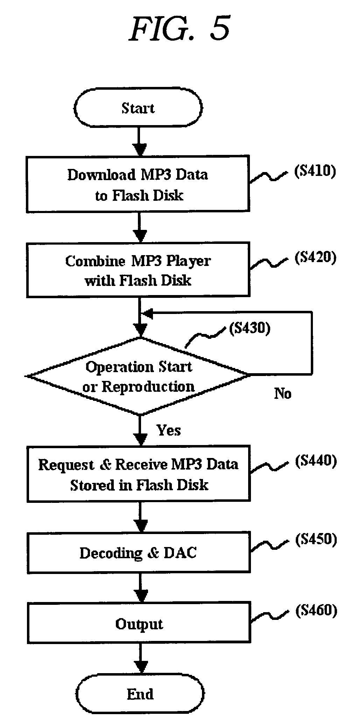

FIG. 5 is a flowchart showing the entire operation of the MP3 player 100 that is the embodiment of the host processing device of the present invention. Only the reproduction operation of the MP3 player 100 is described herein, but the other operations (for example, music selection and music change operations) thereof are not described because the latter operations are the same as those of a general MP3 player.

First, a user connects the flash disk 200 (preferably, the USB flash disk) to the USB port 251 of the PC 250, and downloads desired MP3 data at step S410. The PC 250 communicates with the flash disk 200 using a USB standard method that is called a mass storage class. The USB standard method supports an easy extension to the peripherals of a PC, lower costs, data rate more than 12 Mb per second, compressed data and real-time data. Further, the USB standard method provides a standard interface between combined devices. In this case, the PC 250 (that is, a host controller) controls the entire operation accompanying data transmission, and the data transmission is performed via USB packets.

In that case, such a USB packet is referred to as a token packet, and includes the direction and type of a transaction, a USB device address and a destination number. Accordingly, the flash disk 200 downloads corresponding data by decoding an address field, the function of which is performed by the controller embedded in the flash disk 200. If the transmission of desired data is successfully completed, the controller of the flash disk 200 transmits a handshake packet that notifies the PC 250 of whether the data transmission is successfully performed or not.

Next, the user connects the connector 220 of the flash disk 200 to the USB port 150 of the MP3 player 100 positioned at the inside end of the memory slot 120 by inserting the flash disk 200, in which MP3 data are stored, into the memory slot 120 of the MP3 player 100 at step S420. Thereafter, the CPU 340 of the MP3 player 100 determines whether an operation start key and a reproduction key are input at step S430. If the operation start key is input, the CPU 340 executes initiation mode required to initiate operations and displays the initial status of the MP3 player 100 (for example, the attachment and detachment of the flash disk, and the remaining power of a battery).

If the operation start key and the reproduction key are not input as the result of the determination at the step S430, the CPU 340 stands by. If the operation start key and the reproduction key are input, the CPU 340 requests MP3 data from the flash disk 200 through the interface unit 330 and receives the MP3 data at step S440. The received MP3 data are applied to the decoder unit 370 and decompressed (that is, decoded), and the decompressed data are converted by the D/A converter or a module for performing a function equivalent to that of the D/A converter at S450. The converted analog data are amplified by an amplification means (for example, power amplifier) and the amplified analog data are output through the speaker to the outside at step S460.

Since the MP3 player 100 of the present invention does not include a non-volatile memory means (for example, a flash memory) for storing MP3 data, the MP3 player 100 is an MP3 player-ready product that can perform an MP3 player function itself, but can be used as a complete MP3 player by being combined with an external memory means (that is, the flash disk). Accordingly, the MP3 player 100 of the present invention can be used in such a way that an inexpensive MP3 player-ready product may be provided to a flash disk manufacturer.

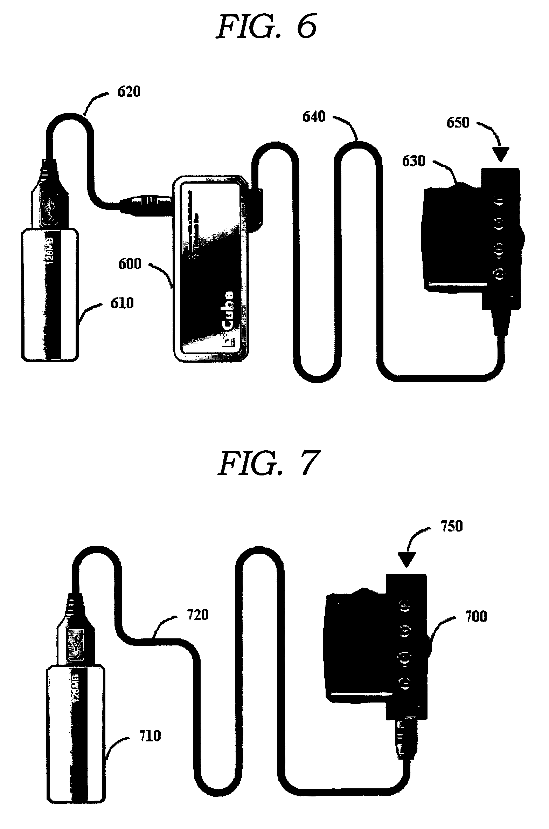

FIG. 6 is a view showing an embodiment in which a host processing device 600 of the present invention is used in combination with an external storage medium 610. The host processing device 600 of the present invention is connected to the external storage medium 610 through the digital interface 620, reads a media file, such as MP3, WMA, AVI, WMV or MPG file, and processes the media file by a certain signal processing method corresponding to the format of the media file, such as the decoding method of MPEG-1 Audio Layer 3. As shown in this drawing, since the host processing device 600 obtains a media file from the external storage medium 610 and uses the media file, the host processing device 600 does not require a large capacity, non-volatile memory space to store media files, differently from the conventional MP3 player 10. Of course, the present invention does not intentionally exclude products having non-volatile memory spaces from the claims of the present invention, and may include a non-volatile memory space to store a system program require other type of products.

The host processing device 600 uses a certain digital interface 620 as a path for obtaining a media file from the external storage device 600. Known USB or IEEE1394 may be used as the digital interface. The present invention does not exclude the use of wireless network technology such as a wireless LAN or mobile communication technology. If a wired digital interface technology is employed, a cable is not only used but also the external storage media 610 is directly connected with the host processing device 600 using a certain connection port so as to implement the digital interface 620.

For the external storage medium 610 used in the host processing device 610, a known storage media, such as a flash disk, an external hard disk or a zip drive, may be used. The host processing device 610 is not limited to an independent type product, but a storage medium embedded or read in some other device may be used as the host processing device 610. The scope of the present invention includes technology in which a mobile phone is connected to the host processing device 600 through USB and a flash memory embedded in the mobile phone is used as the external storage medium 610 of FIG. 6, or a player device capable of reading a compact disc medium is connected to the host processing device 600 through USB and the compact disc medium being read in the player device is used as the external storage medium 610 of FIG. 6. In order to implement the above-described technology, a medium sharing function should be provided in the other device.

A remote controller 630 is preferably provided to conveniently use the host processing device 600 as shown in the drawing. With the remote controller 630, the convenience of use can be improved, and the construction of the host processing device 600 is minimally simplified. The remote controller 630 is generally connected to the host processing device 600 through a known remote controller cable 640, to which the scope of the present invention is not limited. Further, an earphone jack 650 is provided in a portion of the remote controller 630 to allow the earphone to be connected to the remote controller 630, to which the present invention is not limited.

FIG. 7 is a view showing another embodiment in which a host processing device 700 is used in combination with an external storage medium 710. A host processing device 700 of FIG. 7 is characterized in that the host processing device 700 is integrated with a remote controller. The remaining features of this embodiment are the same as those of FIG. 6. From the embodiments as shown in FIGS. 6 and 7, it can be appreciated that the host processing device may be implemented in various forms, as the host processing devices 600 and 700 of these embodiments.

The host processing device 700 shown in FIG. 7 can be conveniently used compared to the host processing device 600 shown in FIG. 6. In the state where the user puts the external storage medium 710, such as a flash disk, an external hard disk, a zip drive, a compact disc player, and a mobile phone, into a pocket or bag, the user uses the host processing device 700 like a remote controller. The host processing device 700 is connected to the external storage medium 710 using the cable type digital interface 720, as which a USB cable or IEEE1394 cable is used.

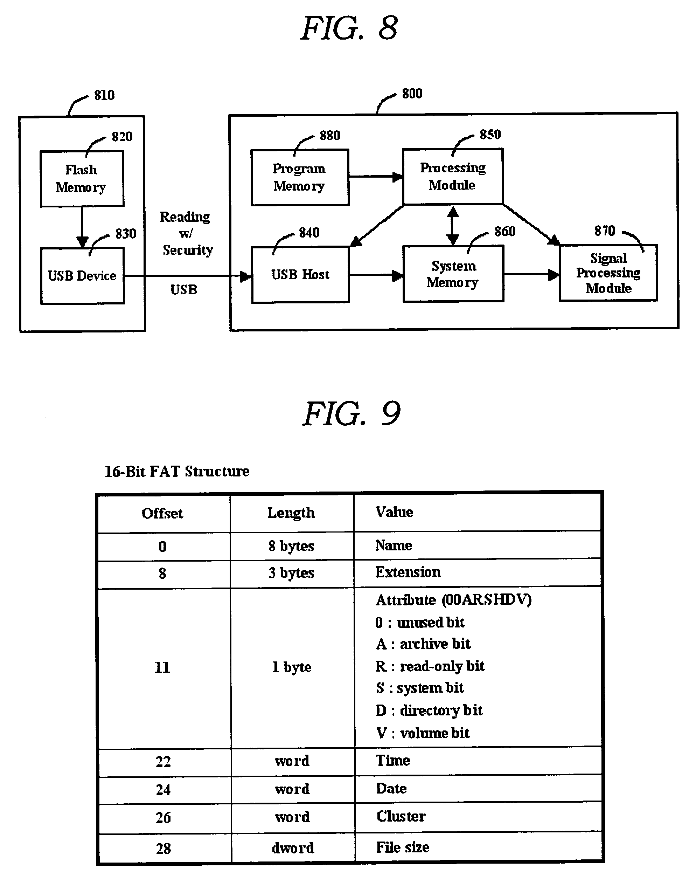

FIG. 8 is a diagram showing an embodiment of the inside construction and operation of a host processing device 800 of the present invention to be used in combination with an external storage medium 810. The host processing device 800 shown in this drawing is mainly constructed to reproduce a media file. The host processing device 800 obtains a desired media file from a flash memory 820 of the external storage medium 810 connected to the host processing device 800, and reproduces the desired media file. When the host processing device 800 is connected to the external storage medium 810 through a digital transmission medium, the host processing device 800, the host processing device 800 preferably and previously downloads the file information of media files stored in the external storage medium 810, such as all or part of a File Allocation Table (FAT), the information of various directory structures and the descriptor information of various hierarchical structures, to the system memory 860. Of course, the amount of previously loaded file information is limited according to the capacity available for the previous loading in the system memory 860. In particular, since the size of the FAT is proportional to the storage capacity of the external storage medium 810, whether to load the FAT to the system memory 860 is determined by a practical implementation environment.

By previously loading the necessary information, the number of accesses to the external storage medium 810 during the operation of the host processing device 800, so that the operational speed of the host processing device 800 is not only improved but also power consumption is reduced. As described above, after the file information has been previously copied in the system memory 860, the file information is preferably referred to through the system memory 860 when the information of a media file is displayed on a user interface or a media file is searched for. However, in the case where file information is previously downloaded, attention has to be paid to the synchronization of the file information existing in the system memory 860 with the file information existing in the external storage medium 810 during operation. This is to provide for situations in which the statue of the flash memory 820 is changed through the creation ad deletion of a media file. To this end, the host processing device 800 needs to perform a synchronization setting operation whenever the file of the external storage medium 810 is changed during operation, manage versions or periodically perform a synchronization operation.

Further, when the host processing device 800 receives a command to select a specific media file from the user, the host processing device 800 preferably accesses the external storage medium 810, searches for the corresponding media file, copies the data of the selected media file to the system memory 860, reads the file data and provides the file data to the signal processing module 870. With this process, the host processing device 800 can reduce the number of accesses to the external storage medium 810 during the processing operation of the media file, so that the operational speed of the host processing device 800 is not only improved but only power consumption is reduced.

When the selected media file is processed, the present invention can be implemented in such a way that, after the media file is completely loaded onto the system memory 860, file data are provided to the signal processing module 870, or, after a part of a media file is loaded, file data correspond to the loaded part of the media file are provided to the signal processing module 870 while the remaining part of the media file is loaded.

There is a case where one or more media files to be reproduced after a media file being currently reproduced can be previously found through information such as a meta information file, a user selection input or file order information. In this case, it is possible to implement the operation as a kind of background operation, in which one or more media files to be produced next are previously copied from the external storage medium 810 to the system memory 810 in the process of performing a signal processing operation for a media file being currently reproduced, through which the operational speed of the host processing device 800 is further improved. However, in this case, the copying operation of next media files is a background operation, so that the priority of the copying operation is preferably set to be lower than that of the signal processing operation for the current media file.

In the meantime, in the case of the utilization of the external storage medium 810, power consumption may be problematic. In particular, in the case where the host processing device 800 is a portable device, such as a portable MP3 player, the power consumption may be further problematic. For example, if the external storage device 810 is not equipped with a separate power source in the case where a USB interface is used, the host processing device 800 should provide a voltage of about 5 V and a current of 40 mA. This power consumption may impose a great burden on the host processing device 800. In order to solve this problem, the USB host 840 may be set for activated mode or non-activated mode according to the control of the processing module 850. The non-activated mode preferably implements low power consumption compared to the activated mode. The implementation of such activated mode is easily enabled using known transistor technology. For example, the activated mode can be easily implemented using the tri-state mode of a transistor.

In the host processing device 840 constructed as described above, the power consumption of the host processing device 800 can be reduced by setting the access mode of the host processing device 800 to the non-activated mode. In this case, if the number of times the host processing device 800 accesses the external storage medium 810 is reduced by one of the above-described various methods, the power consumption of the host processing device 800 can be further reduced.

Currently, protection for digital media files, such as MP3 files, becomes a big issue. Accordingly, a scheme of preventing the illegal reproduction of media files so as to protect the copyright of the media files is desired, as described above. For this purpose, Nextway Inc, that is, the applicant or assignee of the present application, disclosed the technology, which can fundamentally prevent illegal reproduction by applying a special security measure to an external storage medium for media files, in Korean Pat. Appl. No 2003-35689 filed on June 3, 2003. The host processing device 800 of the present invention is preferably constructed to be used together with the external storage medium 810 in which the security measure function disclosed in the patent application is embedded.

When the host processing device 800 reads a media file stored in the external storage medium 810, the host processing device 800 must determine whether the media file has been secured through a security measure. A method of determining whether the media file is secured may be implemented in various fashions. For example, it may be determined that a media file having a certain file extension has been secured, which is problematic in that its accuracy is low. For another example, it may be determined whether a media file has been secured through a security measure using certain file information corresponding to the media file to read. That is, a specific descriptor or the specific field of a FAT, for example, an "attribute" field, is used for such a purpose. The host processing device 800 searches for and reads the media file according to a known file search method if the media file has not been secured, and performs a reading operation with the security measure taken into account if the media file has been secured.

Hereinafter, an embodiment of the above-described security measure is described and the reading operation with the security measure taken into account is described. The security measure can be implemented by hiding a physical location where file data are actually recorded on a storage medium. For example, if a media file "a" is actually recorded at an address 0xFF0000A0, it is indicated in the corresponding field (that is, the cluster field) of a FAT that the file data are recorded at a different address, for example, 0xFFEA00A0. In this case, the host processing device 800 of the present invention should perform a reading operation with the security measure taken into account. That is, the contents of the FAT corresponding to the media file "a" indicates that the physical address of the media file "a" is 0xFFEA00A0, but it should be appreciated that the accurate physical address of the media file "a" is 0xFF0000A0, not 0xFFEA00A0. In the security measure described above, when a media file is recorded on a storage medium, an accurate physical address is transformed into a different address according to a certain transformation rule (first transformation rule), and when the recorded media file is read, the different address is transformed into the accurate address according to another certain transformation rule (second transformation rule), so that the first and second transformation rules are in a reverse transformation relationship with each other. A transformation function corresponding to the transformation rule (that is, the second transformation rule), which is used when the reading process is performed with the security measure taken into account, must be "a one-to-one function" or "a function having the reverse function thereof."

FIG. 9 is a table showing a 16-bit FAT structure. In the security measure described above, file information corresponding to files recorded in the external storage medium 810 is used. In the present specification, a FAT is described as an example of such file information. The FAT shown in FIG. 9 is a 16-bit FAT structure. Another FAT having more bits, for example, an FAT having a 32-bit FAT structure, can be constructed based upon the same concept as that described with respect to the 16-bit FAT in the present specification. Since this construction can be easily implemented by those skilled in the art, a detailed description of the construction is omitted.

Since a "cluster" field represents the physical address of a corresponding file, the "cluster" field may be of use to refer to the physical address of the media file. Some bits of an "attribute" field may be of use to represent whether a secure measure is applied to media files stored in the external storage medium 810. Since 32-bit FAT is provided with sufficient fields available for such a purpose, the FAT can be conveniently constructed to achieve the purpose. Other methods in which some fields other than the above-described fields are used or a descriptor in the external storage medium 810 is employed may be freely applied.

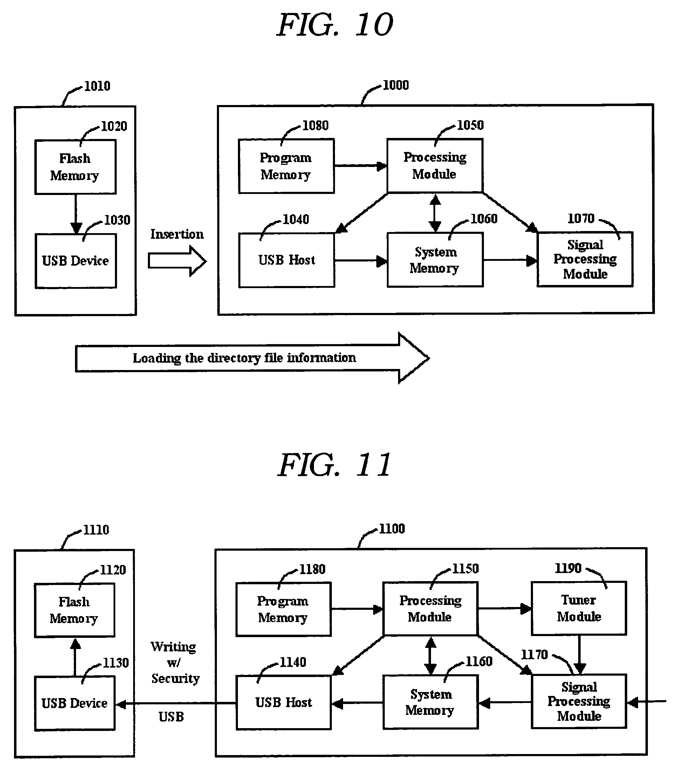

FIG. 10 is a diagram showing an embodiment of the operation that is performed when a host processing device 1000 of the present invention used in combination with an external storage medium 1010 accesses a digital interface. When the host processing device 1000 accesses the external storage medium 1010 through the certain digital interface, the host processing device 1000 preferably and previously copies the file information of one or more media files stored in the external storage medium 1010, such as all or part of a FAT, the information of various directory structures and the descriptor information of various hierarchical structures, to the system memory 1060. By previously copying the file information, the number of accesses to the external storage medium 1010 during the operation of the host processing device 1000, so that the operational speed of the host processing device 800 is not only improved but also power consumption is reduced. After the file information has been previously copied in the system memory 860, the file information is preferably referred to from the system memory 1060. In this case, when the media files of the external storage medium 1010 are changed, the synchronization of the file information existing in the system memory 860 with the file information existing in the external storage medium 810 during operation should be taken into consideration as described above.

FIG. 11 is a diagram showing an embodiment of the inside construction and operation of a host processing device 1110 of the present invention to be used in combination with an external storage medium 1110. In the host processing device shown in this drawing, a signal processing module 1170 may perform an encoding operation using a certain signal processing method, for example, MPEG-1 Audio Layer 3, a TVF format or an OGG format. The signal processing module 1170 outputs media data by encoding input signals transmitted from a certain information source using the signal processing method, and constructs a media file by arranging the encoded media data in a certain file format. The signal format used to perform the decoding operation in the above-described embodiment may be identical with or different from the format used to perform the encoding operation in this embodiment. The present invention is not limited to a specific signal format.

In this embodiment, the media file constructed by the host processing device 1100 is positioned on the system memory 1160. If the external storage medium 1110 cannot be accessed at the time when the media file is constructed, waiting is performed, and the media file is copied to the external storage medium 1110 through a USB host 1140 when the external storage medium 110 can be accessed. If the external storage medium 1110 can be accessed at the time when the media file is constructed, the media file is copied from the system memory 1160 to the external storage medium 1110. During the waiting, the host processing device 1100 of the present invention preferably displays a guide statement, such as "Please Copy," to notify the user of a current status.

The above-described information source may exist in various forms. The information source may be a module that receives signals from the outside and provides the signals to the inside as they are, or processes signals and provides the processed signals. Further, the information source may be a module that generates microphone signals in response to external signals, like a microphone, a module that generates tuning signals by tuning high frequency radio signals, like a tuner module 1190, or the construction in which signals are generated by the performance of function, such as contents reproduction, in the inside of the host processing device 1100. Generally, the information source is understood to be a module or terminal that provides signals in an analog format or digital format to the inside of the host processing device 1100. In the case where a plurality of modules are used as the information source as shown in FIG. 11, a switching module is preferably disposed among the plurality of modules so that one of signals output from the plurality of modules can be selected.

In the operation of outputting media data by encoding input signals transmitted from a certain information source using the signal processing method, and constructing a media file by arranging the encoded media data in a certain file format, it is preferable to construct a media file by integrating media data that are processed until the amount of the media data reaches a first critical value, and to copy the constructed media file to the flash memory 1120 of the external storage medium 1110. In this case, the system memory 1160 may be constructed to temporarily store a plurality of media files, and a second critical value may be set to the capacity of media files that can be accommodated in the system memory 1160. When the size of media files reaches the second critical value, the media files existing in the system memory 1160 may be copied to the external storage medium 1110. The operation of copying media files to the external storage medium 1110 is preferably performed in a background fashion with respect to the operation of encoding the media data. Depending upon implementations, encoding quality is required to deteriorate so as to perform such a copying operation.

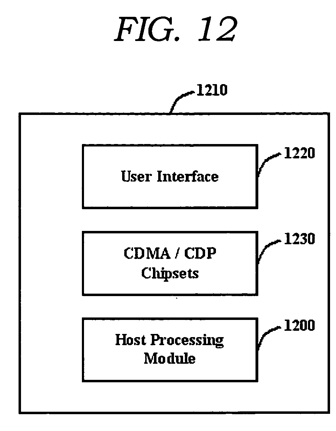

In the meantime, the host processing device of the present invention is not limited to an independent product for processing media files, such as an MP3 player. The present invention must be understood to include the cases where the construction of the present invention is added to a product having some other purpose, such as a mobile phone, a Personal Digital Assistant (PDA) or a CD player, to constitute a composite host processing device. FIG. 12 illustrates an embodiment in which the construction of the present invention, that is, a host processing module 1200, is added to a Code-Division Multiple Access (CDMA) mobile phone or CP player product, thus constituting a composite host processing device 1210.

As illustrated in the drawing, the host processing module 1200 constitutes a kind of composite host processing device 1210 along with an interface module 1220 and an CDMA chipset/CDP chipset module 1230. Even when the present invention is implemented to be a module of the composite host processing device 1210 other than an independent product, the operation of the host processing module 1200 is performed as described with reference to FIGS. 6 to 11. It is apparent from the interpretation of the present invention that the host processing module 1200 may be applied to a car audio product, a PDA and a computer system besides the CDMA mobile phone or CD player product.

Further, a signal processing format available to perform decoding and encoding operations for the host processing device or host processing module of the present invention is not limited to a digital audio format, such as MP3, OGG or TVF, but must be understood to be one of general digital formats.

In accordance with the host processing device of the present invention, the lower manufacturing costs and miniaturization of a product can be realized by fabricating the product without a specific non-volatile memory means for internally storing media files.

In accordance with the host processing device of the present invention, a limitation in the memory of an existing post processing device can be overcome by utilizing a plurality of external storage media if necessary by the displacement of one for another.

In accordance with the host processing device of the present invention, demand for the protection of copyright can be fulfilled by appropriately coping with security measures that are taken to protect media files in external storage media.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A host processing device for reproducing compressed audio data, comprising:
a body;
a memory slot formed in a side of an upper end of the body to accommodate a specific external storage medium;
command input means for instructing the host processing device to execute a specific operation; and
a system control module for controlling an operation of the host processing device, the system control module comprising:
a digital interface unit adapted to communicate with the external storage medium through a port formed on an inside end of the memory slot and interface the audio data according to a certain digital interface communication standard,
a processing module for processing a command signal applied from the command input means and controlling the host processing device to perform an operation corresponding to the command signal, and requesting the audio data from the external storage medium, receiving the audio data and applying the received audio data to a certain path,
a memory unit for storing a program for performing a system operation of the host processing system, and
a decoder unit equipped therein with a buffer to delay a transmission rate and adapted to decode the audio data under the control of the processing module.

2. The host processing device as set forth in claim 1, wherein the specific external storage medium is a USB flash disk and the port is a USB port.

3. A host processing device using an external storage medium, comprising:
a medium access module for accessing the external storage medium through a certain digital transmission medium and providing an access to the external storage medium;
a signal processing module for decoding media data according to a certain first signal processing method;
a processing module for controlling an operation of the host processing device; and
a system memory module for providing a memory space for the operation of the host processing device controlled by the processing module;
wherein, when the processing module connects with the external storage medium, the processing module accesses the external storage medium, reads first file information of one or more media files stored in the external storage medium, and positions the first file information in the system memory module;
wherein, when the processing module receives a command to select a specific one of the media files, the processing module searches for and reads data of the selected media file on the external storage medium through the medium access module based upon the first file information positioned on the system memory module, and provides the read media data to the signal processing module to be decoded according to the first signal processing method.

4. The host processing device as set forth in claim 3, wherein, when the processing module receives the command to select the specific one of the media files stored in the external storage medium, the processing module performs a media file decoding process, the media file decoding process comprising the steps of:
searching for the selected media file on the external storage medium based upon the first file information positioned on the system memory module;
loading the data of the searched media file onto the system memory module; and
providing the data of the searched media file loaded onto the system memory module to the signal processing module to be decoded according to the first signal processing method.

5. A host processing device using an external storage medium, comprising:
a medium access module for accessing the external storage medium through a certain digital transmission medium and providing an access to the external storage medium;
a signal processing module for decoding media data according to a certain first signal processing method;
a user interface module for providing an interface to a user of the host processing device;
a processing module for controlling an operation of the host processing device; and
a system memory module for providing a memory space for the operation of the host processing device controlled by the processing module;
wherein, when the processing module connects with the external storage medium, the processing module accesses the external storage medium through the medium access module, reads first file information of one or more media files stored in the external storage medium, and displays the media files on the user interface module stored in the external storage medium based upon the read first file information;
wherein, when the processing module receives a command to select a specific one of the media files, the processing module accesses the external storage medium through the medium access module, searches for the selected media file, loads data of the searched file data onto the system memory module, and provides the file data loaded onto the system memory module to the signal processing module to be decoded according to the first signal processing method.

6. The host processing device as set forth in claim 3 or 5, wherein the first file information of the media file includes descriptor information of the media file.

7. The host processing device as set forth in claim 4 or 5, wherein, while the data of the selected media file provided to the signal processing module are decoded, the processing module performs a media file preloading process in a background fashion with respect to the decoding process for the selected media file, the media file preloading process comprising the steps of:
determining a media file to be processed after the selected media file;
searching for the determined media file on the external storage medium based upon the first file information positioned on the system memory module; and
loading data of the searched media file onto the system memory module.

8. The host processing device as set forth in claim 4 or 5, wherein the medium access module is constructed to set an access mode thereof to an activated mode and a non-activated mode requiring low power consumption under a control of the processing module, and when the processing module accesses the external storage device, the processing module sets the access mode to the activated mode before the access and the access mode to the non-activated mode after the access.

9. The host processing device as set forth in claim 3 or 5, wherein, when the processing module reads data of the media file stored in the external storage medium, the processing module determines whether the media file has been secured through a security measure, if the media file has not been secured, searches for the data of the media file on the external storage medium according to a known file search method, and, if the media file has been secured, obtains a first value regarding a physical location of the media file on the external storage medium from the second file information of the media file, obtains a second value corresponding to the first value according to a second transformation rule in which an inverse function *F*⁻¹ with respect to a function *F* corresponding to a first transformation rule, which is used to secure the media file, exists, and searches for the data of the media file on the external storage medium based upon the second value.

10. The host processing device as set forth in claim 9, wherein the second file information of the media file includes a File Allocation Table (FAT) for the media file.

11. The host processing device as set forth in claim 3 or 5, further comprising an information sourcing module for sourcing a signal,
wherein the signal processing module further performs a process of encoding the input signal into media data according to a certain second signal processing method,
wherein, when the processing module receives an encoding command, the processing module transmits the signal provided from the information sourcing module to the signal processing module to be encoded into media data according to the second signal processing method, constructs a media file from the encoded media data and positions the media file on the system memory module, and copies the constructed media file to the external storage medium through the medium access module if the external storage medium can be accessed through the medium access module.

12. The host processing device as set forth in claim 11, wherein, when a size of media data produced by the encoding of the signal processing module reaches a certain first critical value, the processing module constructs a media file from the produced media data, positions the produced media data on the system memory module and copies the constructed media file from the system memory module to the external storage medium through the medium access module.

13. The host processing device as set forth in claim 11, wherein the information sourcing module comprises a tuner module for generating a tuning signal by tuning a high frequency radio signal, a microphone module for generating a microphone signal in response to external sound, and a switching module for selecting one output signal from a plurality of input signals including the tuning and microphone signals, and
wherein the information sourcing module sources the output signal selected by the switching module to the signal processing module.

14. The host processing device as set forth in claim 3 or 5, wherein the digital transmission medium is a known USB medium, and the medium access module connects with the external storage medium through the USB medium and operates in a known host mode.

15. The host processing device as set forth in claim 3 or 5, wherein the digital transmission medium is a known IEEE1394 medium, and the medium access module connects with the external storage medium through the IEEE1394 medium and operates in known Serial Bus Protocol 2 initiator mode.

16. The host processing device as set forth in claim 3 or 5, wherein the external storage medium includes an independent external storage device.

17. The host processing device as set forth in claim 3 or 5, wherein the external storage medium includes a non-volatile memory module embedded in a mobile communication device, and the host processing module connects with the mobile communication device through the medium access module and accesses the memory module.

18. The host processing device as set forth in claim 3 or 5, wherein the external storage medium includes a recording medium being read in a recording medium reading device, and the host processing module connects with the recording medium reading device through the medium access module and accesses the recording medium being read in the recording medium reading device.

19. The host processing device as set forth in claim 3 or 5, further including user interface means for providing an interface to a user of the host processing device in an integral fashion,
wherein the digital transmission medium is formed of a cable, and the host processing device and the external storage medium are connected to each other through the cable.
